# EUROPEAN PATENT APPLICATION

(11) **EP 4 644 185 A1**
(43) Date of publication of application: **05.11.2025**
(21) Application number: 24173400.3
(22) Date of filing: 30.04.2024
(51) Int. Cl.: B60R 3/00

(54) **AN ACCESS SYSTEM FOR A VEHICLE**

(71) Applicant: VOLVO TRUCK CORPORATION, 405 08 Göteborg (SE)
(72) Inventor: KRISHNA MONTHIMAR, Satheesha, 560075 Bangalore, Karnataka (IN); NALAWADE, Dinkar, 560043 Bangalore, Karnataka (IN)
(74) Representative: Germain Maureau

(57) **Abstract**

The invention relates to an access system (2) for a vehicle, comprising a door (3) mounted to rotate about a door shaft (5) and steps (4) to facilitate entry into the vehicle, the steps being adjacent to the door (3), wherein the access system (2) further comprises a fairing (6) for covering at least one of said steps (4), said fairing (6) being mounted so as to rotate about a fairing shaft (7), the fairing (6) being able to be driven in rotation by the door (3), in the same direction of rotation as that of the door (3), via a gear system (9, 10, 11) comprising a first gear wheel (9) secured to the door shaft (5) and cooperating with a second gear wheel (10) secured to the fairing shaft (7).

## Description

### TECHNICAL FIELD

The disclosure relates to an access system for a vehicle. In particular aspects, the disclosure relates to an access of the type comprising a pivoting door which can be mounted in the body of the vehicle. The disclosure can be applied in heavy-duty vehicles, such as trucks, buses, and construction equipment. Although the disclosure may be described with respect to a particular vehicle, the disclosure is not restricted to any particular vehicle.

### BACKGROUND

A truck is generally equipped with steps to facilitate entry into the vehicle cab of the truck. Some of these steps are covered by the vehicle cab door, while other lower steps remain uncovered.

However, this design has a number of drawbacks, related in particular to aerodynamic and safety aspects. Uncovered steps create air resistance while driving. The upper steps are closed by the heavy and long design of the main door, which increases the cost, weight and effort for drivers to open the door. In addition, mud, snow and water can accumulate, and the driver risks being knocked over often because of the open steps. The possibility that someone could jump onto the truck and stand on the steps could also constitute a theft risk for the driver. Finally, the aesthetics of the truck body are always compromised by visual steps.

The present invention aims to remedy these drawbacks.

### SUMMARY

According to a first aspect of the disclosure, an access system for a vehicle comprises:
- a door mounted to rotate about a door shaft, and
- steps to facilitate entry into the vehicle, the steps being adjacent to the door,
   wherein the access system further comprises a fairing for covering at least one of said steps, said fairing being mounted so as to rotate about a fairing shaft, the fairing being able to be driven in rotation by the door, in the same direction of rotation as that of the door, via a gear system comprising a first gear wheel secured to the door shaft and cooperating with a second gear wheel secured to the fairing shaft.

The first aspect of the disclosure may seek to provide aerodynamic benefits, given that as all steps can be covered by the fairing. The fairing is easily operated by opening and closing the vehicle door.

In some examples, the first gear wheel cooperates with the second gear wheel via a third gear wheel of the gear system placed between the first gear wheel and the second gear wheel, the third gear wheel cooperating with both the first gear wheel and the second gear wheel.

In some examples, the door is mounted in the body of the vehicle and the fairing is mounted in the chassis of the vehicle.

In some examples, the door shaft and the fairing shaft are parallel.

In some examples, the door shaft and the fairing shaft are not aligned.

In some examples, the first gear wheel is located at a lower end of the door shaft.

In some examples, the second gear wheel is located at an upper end of the fairing shaft.

In some examples, the steps are located under the door.

In some examples, the first gear wheel is toothed on only part of its circumference.

In some examples, the second gear wheel is toothed over its entire circumference.

In some examples, the third gear wheel is toothed over its entire circumference.

In some examples, the gear system is configured such that rotation of the door from a closed position to a predetermined opening angle rotates the fairing and such that rotation of the door beyond said predetermined opening angle does not rotate the fairing.

In some examples, the predetermined opening angle is comprised between 20° and 30°.

In some examples, the gear system is configured such that opening the door to the predetermined opening angle causes the fairing to open fully.

In some examples, the fairing material is lighter than the door material.

In some examples, a vehicle comprises an access system described above.

In some examples, the vehicle is a truck.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

With reference to the appended drawings, below follows a more detailed description of aspects of the disclosure cited as examples.
**FIG. 1** is a side view of a front portion of a prior art truck.
**FIG. 2** is a perspective view of a front portion of a prior art truck.
**FIG. 3** is a side view of a front portion of a truck including an access system of the invention according to one example.
**FIG. 4** is a detailed view of the access system.
**FIG. 5** is a side view of the access system during a first step of a method of opening the access system.
**FIG. 6** is a side view of the access system during a second step of a method of opening the access system.
**FIG. 7** is a side view of the access system during a third step of a method of opening of the access system.
**FIG. 8** is a side view of the access system during a first step of a method of closing the access system.
**FIG. 9** is a side view of the access system during a second step of a method of closing the access system.
**FIG. 10** is a side view of the access system during a third step of a method of closing the access system.
**FIG. 11** is a side view of the truck in a tilted position.

### DETAILED DESCRIPTION

Aspects set forth below represent the necessary information to enable those skilled in the art to practice the disclosure.

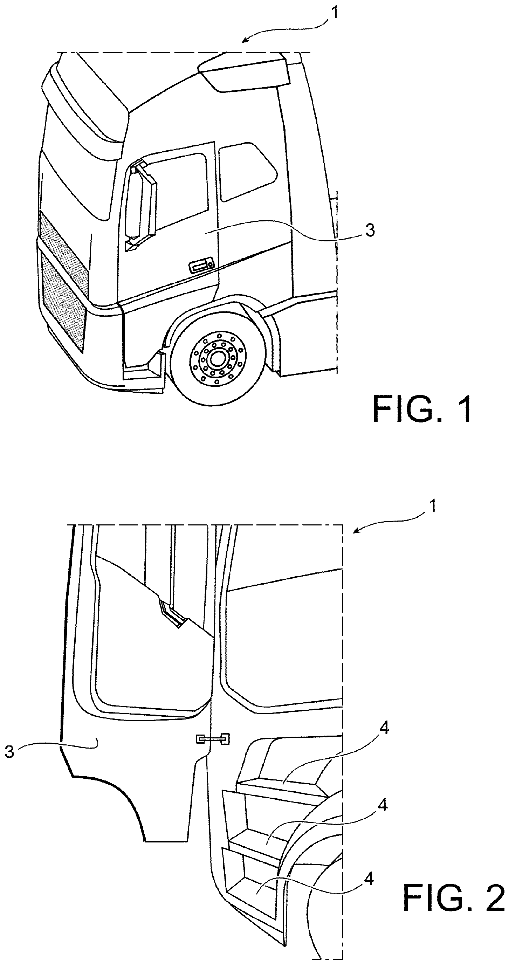

**FIG. 1** is a side view of a front part of a prior art truck 1, while **FIG. 2** is a perspective view of a front portion of a prior art truck 1.

A vehicle cab door 3 of the truck 1 is pivotally mounted. The truck 1 is provided with steps 4 to facilitate entry into the vehicle cab of the truck 1. The two upper steps 4 are covered by the vehicle cab door 3, while the lower step 4 remains uncovered.

However, such a construction has a number of disadvantages, in particular from an aerodynamic, security and aesthetic point of view.

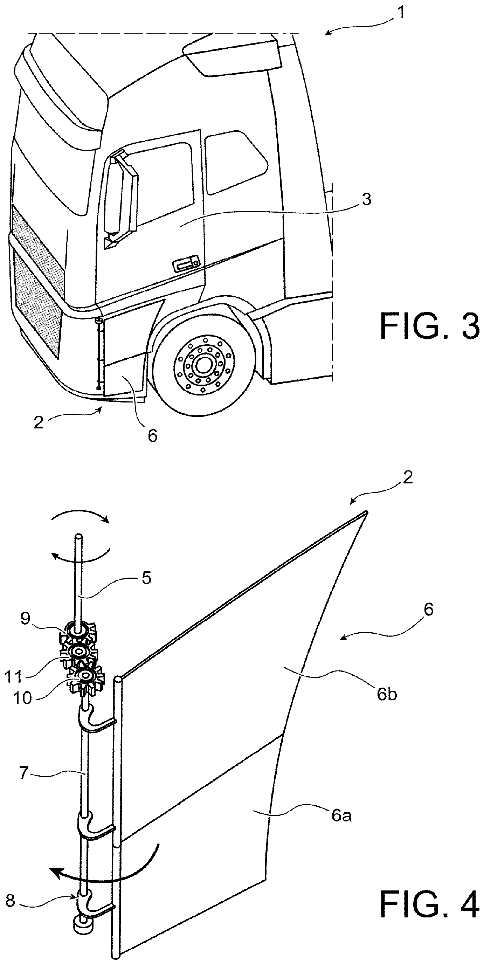

**FIG. 3** is a side view of a front portion of a truck including an access system of the invention according to one example, while **FIG. 4** is a detailed view of the access system.

The truck 1 is provided with an access system 2 comprising a vehicle cab door 3 and the steps 4. The vehicle cab door 3 is pivotally mounted for pivotal movement about a substantially vertical shaft/axis 5 by means of hinges. The access system further comprises a fairing 6 which is arranged immediately below the door 3 and which is pivotally mounted for pivotal movement about a substantially vertical shaft/axis 7 by means of further hinges 8. The shaft 7 of the fairing 6 can be provided with three hinges 8, including one hinge 8 that is attached to a lower half part 6a of the fairing 6 and two hinges 8 that are attached to an upper half part 6b of the fairing 6. The hinges 8 preferably extend horizontally and can be boomerang-shaped. The hinges 8 can be convex, as shown. Alternatively, the hinges 8 can be mounted concavely.

The fairing 6 is used to cover at least one step 4 adjacent to the door 3. In the example, when closed, the fairing 6 can prevent the use of three steps 4 by covering the two upper steps and covering the space immediately above the lowest step. The steps 4 are preferably fixed in the chassis of the vehicle 1.

The pivoting door 3 is mountable in the body of the vehicle 1, and the pivoting fairing 6 is mountable in the chassis of the vehicle 1 to cover the steps 4 adjacent to the door 3.

The lower end of the shaft 5 of the door 3 is provided with a gear wheel 9 which cooperates with a gear wheel 10 arranged at the upper end of the shaft 7 of the fairing 6. The gear wheel 9 is referred to as the first gear wheel, while the gear wheel 10 is referred to as the second gear wheel.

The first gear wheel 9 cooperates with the second gear wheel 10 via a third gear wheel 11 placed between the first gear wheel 9 and the second gear wheel 10, the third gear wheel 11 cooperating with both the first gear wheel 9 and the second gear wheel 10.

Thus, a rotation of the door 3 rotates the fairing 6 in the same direction of rotation as that of the door 3, via the first, third and second gear wheels 9, 11, 10. The shaft 5 of the door 3 and the shaft 7 of the fairing 6 are parallel and not aligned.

The first gear wheel 9 has teeth only on part of its circumference, whereas the second gear wheel 10 and the third gear wheel 11 have teeth over their entire circumference. In this way, a rotation of the gear wheel 9 beyond a threshold angle of rotation no longer causes the rotation of the second gear wheel 10.

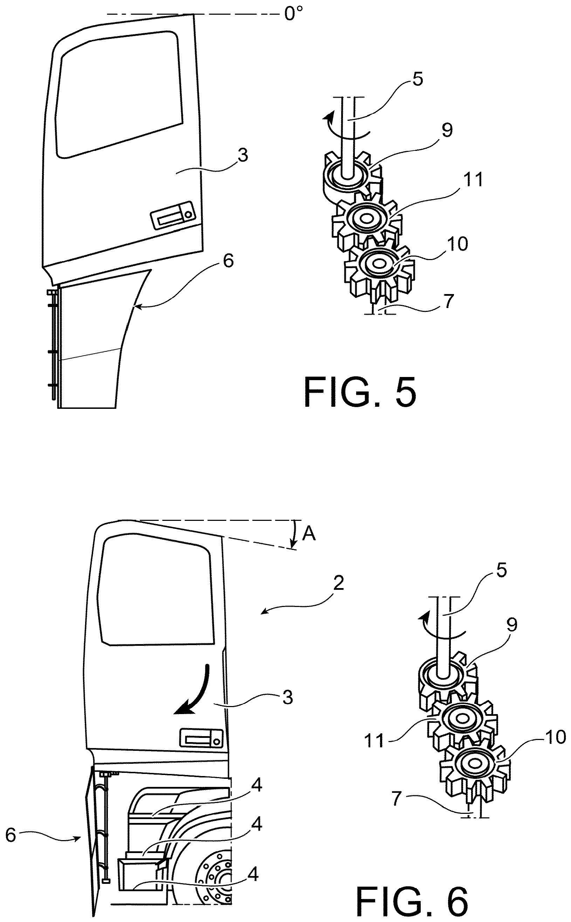

**FIG. 5** is a side view of the access system 2 during a first step of a method of opening the access system.

In this first step, the access system 2 is in a closed configuration. The cab door 3 is closed and therefore the first gear wheel 9 does not rotate the second gear wheel 10. In this closed configuration, the fairing 6 is also closed and covers all the steps 4.

**FIG. 6** is a side view of the access system 2 during a second step of a method of opening the access system 2. When the cab door 3 is rotated, the rotation of the cab door 3 results in the rotation of the first gear wheel 9. The rotation of the first gear wheel 9 in turn drives the rotation of the third gear wheel 11 which in turn drives the rotation of the second gear wheel 10. Since the first gear wheel 9 has teeth on only part of its circumference, the rotation of the first gear wheel 9 drives the third gear wheel 11 and the second gear wheel 10 only as long as the teeth of the first gear wheel 9 cooperate with the teeth of the third gear wheel 11.

The dimensions of the first, second and third gear wheels 9, 10, 11 and the toothed portion of the circumference of the first gear wheel 9 can be determined so as to cause the first gear wheel 9 to cooperate with the second gear wheel 10 from the opening of the door 3 and up to a first predetermined angle A and so as to cause the fairing 6 to rotate up to a second predetermined angle. For example, the portion of the circumference of the first gear wheel 9 provided with teeth can be determined so that the first gear wheel 9 cooperates with the second gear wheel 10 via the third gear wheel 11 during a maximum rotation of 25°, i.e. the cooperation of all the teeth of the first gear wheel 9 with the second gear wheel 10 takes place during a rotation of the first gear wheel 9 between 0° (corresponding to the closed position of the door 3) and 25°. Beyond 25°, the first gear wheel 9 and the second gear wheel 10 no longer work together. In addition, the first gear wheel 9, the second gear wheel 10 and the third gear wheel 11 can be dimensioned so that a 25° rotation of the first gear wheel 9 causes a 90° rotation of the second gear wheel 10. When the second gearwheel 10 is rotated by 90°, the fairing 6 is completely opened and the steps 4 accessible to the driver.

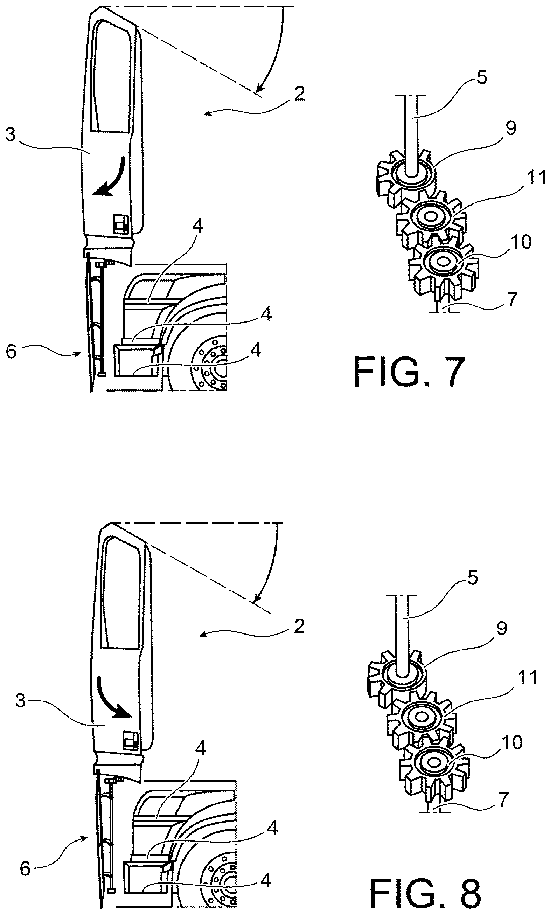

**FIG. 7** is a side view of the access system 2 during a third step of a method of opening the access system 2. As soon as the opening rotation of the cab door 3 continues beyond the first predetermined angle A (25° in this example), there is no longer any tooth of the first gear wheel 9 cooperating with the second gear wheel 10. Thus, the rotation of the first gear wheel 9 no longer causes the rotation of the third gear wheel 11 and of the second gear wheel 10, and, consequently, the rotation of the cab door 3 beyond the first predetermined angle no longer causes the rotation of the fairing 6. In other words, the opening rotation of the cab door 3 from 25° to 90° (full opening of the cab door 3) no longer causes the fairing 6 to rotate.

**FIG. 8** is a side view of the access system during a first step of a method of closing the access system.

As described above, when the cab door 3 is in the fully open position, the fairing 6 is also in its fully open position. When the cab door 3 is started to close, from the fully open angle (90°) to the first predetermined angle A (25° in this example), there is no tooth of the first gear wheel 9 that can cooperate with a tooth of the third gear wheel 11. Thus, rotation of the first gear wheel 9 does not cause rotation of the third gear wheel 11 and of the second gear wheel 10, and consequently rotation of the cab door 3 between the angle of full opening (90°) and the first predetermined angle (25°) does not cause rotation of the fairing 6.

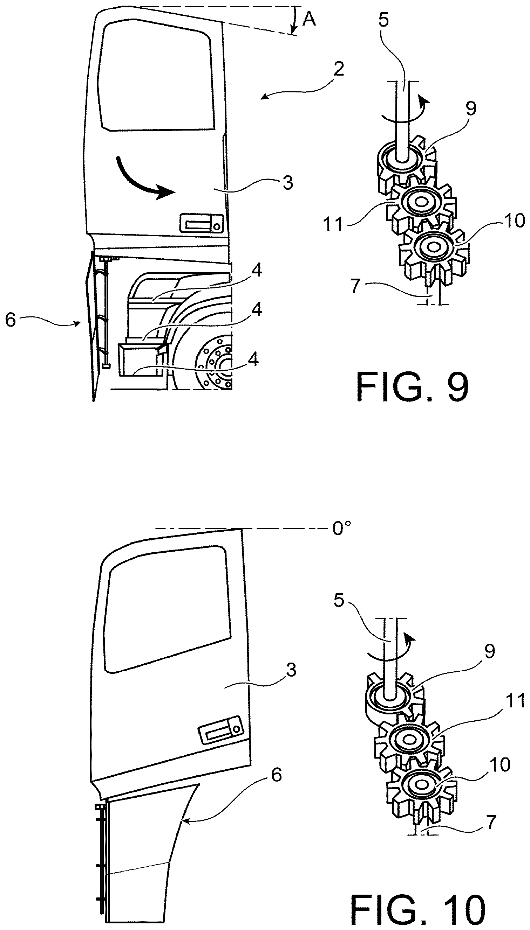

**FIG. 9** is a side view of the access system during a second step of a method of closing the access system. When the position of the cab door 3 reaches the first predetermined angle A (25°), the teeth of the first gear wheel 9 begin to cooperate with the second gear wheel 10 via the third gear wheel 11 so that the fairing 6 rotates and begins to close.

**FIG. 10** is a side view of the access system during a third step of a method of closing the access system. When the cab door 3 is fully rotated, the cab door 3 is in the closed position. The fairing 6, which is rotated by the cab door 3, is also in the closed position. As a result, the steps are completely covered by the fairing 6.

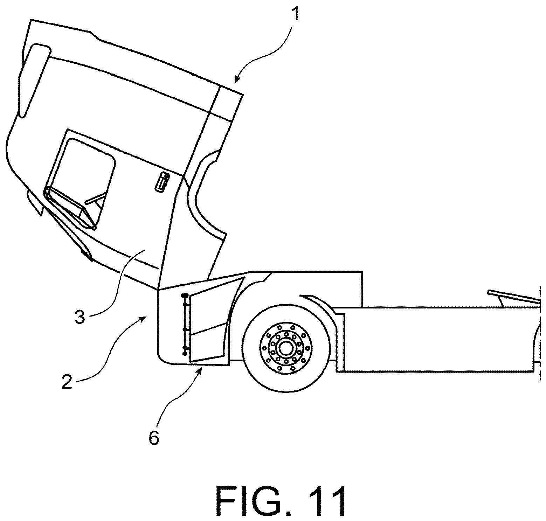

**FIG. 11** is a side view of the truck in a tilted position. In this configuration, the first gear wheel 9 and the second gear wheel 10 are disengaged.

The access system of the invention has a number of advantages. An improvement in aerodynamic performance is achieved, reducing fuel or energy consumption by more than 1% (steps on both sides). The lower step will be integrated and operated by the cab door when closing and opening. No energy is required for the installation, as it is powered by the movements of the cab door. The mechanism is simple and can be made of non-metallic materials to reduce weight. The driver requires minimal effort to open and close the main door, as the weight has been reduced compared to the current heavier design. The lower step is covered by the fairing, eliminating problems with mud and snow build-up and slipping for the driver when using the steps. The durability of the steps is improved thanks to the fairing. The aesthetics of the side area of the cab are improved by closing all the steps. Finally, theft is largely prevented by restricting access to the cab when the steps are closed.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. An access system (2) for a vehicle (1), comprising:
- a door (3) mounted to rotate about a door shaft (5), and
- steps (4) to facilitate entry into the vehicle (1), the steps being adjacent to the door (3),
wherein the access system (2) further comprises a fairing (6) for covering at least one of said steps (4), said fairing (6) being mounted so as to rotate about a fairing shaft (7), the fairing (6) being able to be driven in rotation by the door (3), in the same direction of rotation as that of the door (3), via a gear system (9, 10, 11) comprising a first gear wheel (9) secured to the door shaft (5) and cooperating with a second gear wheel (10) secured to the fairing shaft (7).

2. The access system (2) of claim 1, wherein the first gear wheel (9) cooperates with the second gear wheel (10) via a third gear wheel (11) of the gear system (9, 10, 11) placed between the first gear wheel (9) and the second gear wheel (10), the third gear wheel (11) cooperating with both the first gear wheel (9) and the second gear wheel (10).

3. The access system (2) of claim 1 or 2, wherein the door (3) is mounted in the body of the vehicle (1) and the fairing (6) is mounted in the chassis of the vehicle (1).

4. The access system (2) of any claims 1-3, wherein the door shaft (5) and the fairing shaft (7) are parallel.

5. The access system (2) of any claims 1-4, wherein the door shaft (5) and the fairing shaft (7) are not aligned.

6. The access system (2) of any claims 1-5, wherein the first gear wheel (9) is located at a lower end of the door shaft (5).

7. The access system (2) of any claims 1-6, wherein the second gear wheel (10) is located at an upper end of the fairing shaft (7).

8. The access system (2) of any claims 1-7, wherein the first gear wheel (9) is toothed on only part of its circumference.

9. The access system (2) of any claims 1-8, wherein the second gear wheel (10) is toothed over its entire circumference.

10. The access system (2) of claim 8 or 9, wherein the gear system (9, 10, 11) is configured such that rotation of the door (3) from a closed position to a predetermined opening angle (A) rotates the fairing (6) and such that rotation of the door (3) beyond said predetermined opening angle (A) does not rotate the fairing (6).

11. The access system (2) of claim 10, wherein the predetermined opening angle (A) is comprised between 20° and 30°.

12. The access system (2) of claim 10 or 11, wherein the gear system (9, 10, 11) is configured such that opening the door (3) to the predetermined opening angle (A) causes the fairing (6) to open fully.

13. The access system (2) of any claims 1-12, wherein the fairing material is lighter than the door material.

14. A vehicle (1) comprising an access system (2) according to any of claims 1-13.

15. A vehicle (1) of claim 14, wherein the vehicle (1) is a truck.
